# EUROPÄISCHE PATENTSCHRIFT

(11) **EP 1 537 005 B1**
(45) Veröffentlichungstag und Bekanntmachung des Hinweises auf die Patenterteilung: **14.11.2007**
(21) Anmeldenummer: 03793743.0
(22) Anmeldetag: 21.08.2003
(51) Int. Cl.: B62D 15/02, B62D 5/04

(54) **VORRICHTUNG UND VERFAHREN ZUR LENKUNTERSTÜTZUNG FÜR FAHRZEUGE MIT ELEKTROMECHANISCHER LENKUNG**
DEVICE AND METHOD PROVIDING STEERING ASSISTANCE IN ELECTROMECHANICALLY STEERED VEHICLES
DISPOSITIF ET PROCEDE RELATIFS A UNE DIRECTION ASSISTEE POUR VEHICULES A MOTEUR A DIRECTION ELECTROMECANIQUE

(30) Priorität: 06.09.2002 DE 10244070
(43) Veröffentlichungstag der Anmeldung: 08.06.2005
(73) Patentinhaber: Volkswagen Aktiengesellschaft, 38436 Wolfsburg (DE)
(72) Erfinder: KWASNY, Olaf, 38229 Salzgitter (DE); WAHNSCHAFFE, Klaus, 38444 Wolfsburg / Hattorf (DE); MANZ, Holger, 38173 Sickte (DE)
(74) Vertreter: Patentanwälte Bressel und Partner
(86) Internationale Anmeldenummer: PCT/EP2003/009289
(87) Internationale Veröffentlichungsnummer: WO 2004/022415

(56) Entgegenhaltungen:
- EP-A- 0 893 329
- DE-A- 10 161 619
- US-A- 5 422 810

## Beschreibung

Die Erfindung bezieht sich auf eine Vorrichtung und ein Verfahren für eine Lenkunterstützung für Fahrzeuge mit elektromechanischer Lenkung.

Fahrbahneigenschaften oder Veränderungen des Fahrzeugs, beispielsweise aufgrund von Reifenverschleiß, können zu einem Schiefziehen des Fahrzeugs führen, derart dass das Fahrzeug zu einer Seite zieht. Das Schiefziehen kann durch eine kurzweilig anliegende Fahrsituation bedingt sein oder aufgrund von Veränderungen des Fahrzeugs längerfristig die Geradeausfahrt beeinträchtigen. Um einem Schiefziehen entgegenzuwirken, muss von dem Fahrer ein anhaltendes Lenkmoment aufgebracht werden.

Aus der DE 697 05 365 T2 ist eine Lenkwinkelkorrektur für ein Servolenksystem bekannt, durch welche ein Fahrer bei der Geradeausfahrt des Fahrzeugs unterstützt wird. Hierfür werden ein Lenkwinkel und ein Lenkmoment einem Regler zugeführt. Der Regler ermittelt daraus notwendige Ventileinstellungen, um dem Schiefziehverhalten entgegen zu wirken. Der Regler reagiert auf einen anliegenden Lenkwinkel und ein anliegendes Lenkmoment ohne Berücksichtigung der aktuellen Fahrsituation.

Aus der EP 0 893 329 A2 ist eine gattungsgemäße Vorrichtung für eine Lenkunterstützung für Fahrzeuge mit elektromechanischer Lenkung bekannt, wobei lenkbare Fahrzeugräder sowohl mit einem durch einen Fahrer beeinflussbaren Lenkmittel als auch mit einem elektrischen Servomotor antreibend verbunden sind, in mindestens einem Rechenmittel ein Unterstützungswinkel und/oder ein Unterstützungsmoment ermittelt wird und der Unterstützungswinkel und/oder das Unterstützungsmoment durch den Servomotor aufgebracht wird, wobei der Unterstützungswinkel und/oder das Unterstützungsmoment aus einem Langzeitkorrekturwert für eine Langzeitkorrektur gebildet wird, wobei ein Differenzwinkel zwischen einem Lenkwinkel und einer Geradeausfahrt ermittelt wird und mindestens ein Korrekturwert mindestens in Abhängigkeit des Differenzwinkels erlernt wird, und die Langzeitkorrektur fahrsituationsabhängig zu- und/oder abschaltbar ist, wobei die Fahrsituation in dem Rechenmittel mindestens aus der Fahrzeuggeschwindigkeit ermittelt wird.

Der Erfindung liegt daher das technische Problem zugrunde, eine Vorrichtung und ein Verfahren zur fahrsituationsabhängigen Lenkunterstützung für Fahrzeuge mit elektromechanischer Lenkung zu schaffen, welche ein variables Schiefziehverhalten des Fahrzeugs korrigieren.

Die Lösung des Problems ergibt sich durch die Gegenstände mit den Merkmalen der Ansprüche 1 und 6. Weitere vorteilhafte Ausgestaltungen der Erfindung ergeben sich aus den Unteransprüchen.

Der Unterstützungswinkel und/oder das Unterstützungsmoment wird mindestens aus einem Langzeitkorrekturwert für eine Langzeitkorrektur und/oder einem Kurzeitkorrekturwert für eine Kurzzeitkorrektur gebildet, wobei ein Differenzwinkel zwischen einem Lenkwinkel und einer Geradeausfahrt erfassbar ist und mindestens ein Korrekturwert mindestens in Abhängigkeit des Differenzwinkels erlernt wird, und die Langzeitkorrektur und/oder die Kurzzeitkorrektur fahrsituationsabhängig zu- und/oder abgeschaltet werden, wobei die Fahrsituation in einem Rechenmittel mindestens aus dem Lenkwinkel, der Lenkwinkelgeschwindigkeit und/oder der Fahrzeuggeschwindigkeit ermittelt wird. Die Langzeitkorrektur und die Kurzzeitkorrektur dienen als Geradeauslaufkorrektur, durch die das Schiefziehen eines Fahrzeuges unter verschiedenen Randbedingungen vermeidbar ist. Das Schiefziehen des Fahrzeuges kann beispielsweise hervorgerufen werden durch einen falsch kalibrierten Lenkwinkelsensor, einen Reifenverschleiß oder eine Fahrbahnneigung. Die Langzeitkorrektur dient dazu, ein schleichendes Schiefziehen zu kompensieren. Ein kurzweiliges Schiefziehen soll durch die Kurzzeitkorrektur ausgeglichen werden. Die Korrekturwerte werden erlernt, d.h. der Langzeitkorrekturwert und der Kurzzeitkorrekturwert sind nicht konstant, sondern werden selbsttätig an veränderte Situationen angepasst. Aus Sicherheitsgründen ist eine Geradeauslaufkorrektur in vielen Fahrzeugen nur bei geringen Fahrgeschwindigkeiten und nur für kleine Differenzwinkel, beispielsweise unter 10°, zugeschaltet. Eine zugeschaltete Geradeauskorrektur ist fahrsituationsabhängig wieder deaktivierbar. Ein Arbeitsbereich für die Kurzzeitkorrektur ist dabei zumeist geringer als ein Arbeitsbereich die Langzeitkorrektur. Dabei wird der Korrekturwert der Langzeitkorrektur durch einen Integrator ermittelt, wobei ein Initialwert des Integrators abgespeichert ist, beispielsweise in einem EEPROM. Ein beispielsweise mittels einer Langzeitkorrektur erlernter Korrekturwert für eine Geradeauskorrektur ist in einem geeigneten Speichermedium, beispielsweise eine EEPROM, ablegbar und steht so für spätere Fahrten mit dem Fahrzeug wieder zur Verfügung. Der gespeicherte und/oder ermittelte Korrekturwert ist somit ein Erwartungswert für einen Lenkwinkel bei einer Geradeausfahrt. Der Differenzwinkel zwischen der Geradeausfahrt und dem Lenkwinkel kann aus der Differenz zwischen dem Erwartungswert und dem Lenkwinkel ermittelt werden. Lag bislang kein Schiefziehen vor, so ist der Korrekturwert Null. Durch einen konstanten Faktor ist eine Korrektur- oder Lerngeschwindigkeit bei der Integration anpassbar. Der Korrekturwert ist durch eine Begrenzung beschränkt.

In einer weiteren Ausführungsform wird die Geradeausfahrt durch den Langzeitkorrekturwert abgebildet. Ein erlernter Langzeitkorrekturwert spiegelt einen notwendigen Unterstützungswinkel für eine Geradeausfahrt wieder. Er ist daher als Maß für eine Geradeausfahrt verwertbar.

In einer bevorzugten Ausführungsform wird mindestens die Langzeitkorrektur deaktiviert, wenn die Lenkwinkelgeschwindigkeit einen Schwellwert überschreitet und/oder wenn der Differenzwinkel über einen festgelegten Zeitraum einen Schwellwert überschreitet. Dadurch wird eine Reaktion auf stark niederfrequente Lenkradschwankungen und/oder eine Langzeitkorrektur bei einer langgezogenen Kurvenfahrt vermieden.

In einer weiteren Ausführungsform wird der Korrekturwert der Kurzzeitkorrektur durch einen Integrator ermittelt, wobei ein Initialwert des Integrators Null ist und der Integrator mindestens in Abhängigkeit eines Korrekturwertes der Geradeauskorrektur und/oder der Lenkwinkelgeschwindigkeit auf den Initialwert rücksetzbar ist. Eine Kurzzeitkorrektur ist beispielsweise bei einem Übergang von einer geneigten Strasse auf eine gerade Strasse notwendig. Keine Kurzzeitkorrektur soll dagegen bei einem fahrsituationsbedingten Lenkeingriff vorgenommen werden. Ein derartiger Lenkeingriff wird durch eine hohe Winkelgeschwindigkeit erkannt, beispielsweise über 500°/s. Eine Kurvenfahrt ist beispielsweise durch hohe Korrekturwerte erkennbar. Um eine Anpassung auf die durch den Lenkeingriff und/oder nach einer Kurvenfahrt veränderte Situation zu erreichen, führen derartige Fahrsituationen zu einem Rücksetzen des Korrekturwertes auf einen Startwert.

Die Erfindung wird nachfolgend anhand eines bevorzugten Ausführungsbeispiels näher erläutert. Die Figuren zeigen:
- Fig. 1: eine Prinzipdarstellung einer elektromechanischen Lenkung mit . Lenkunterstützung und
- Fig. 2: eine Geradeauslaufkorrektur.

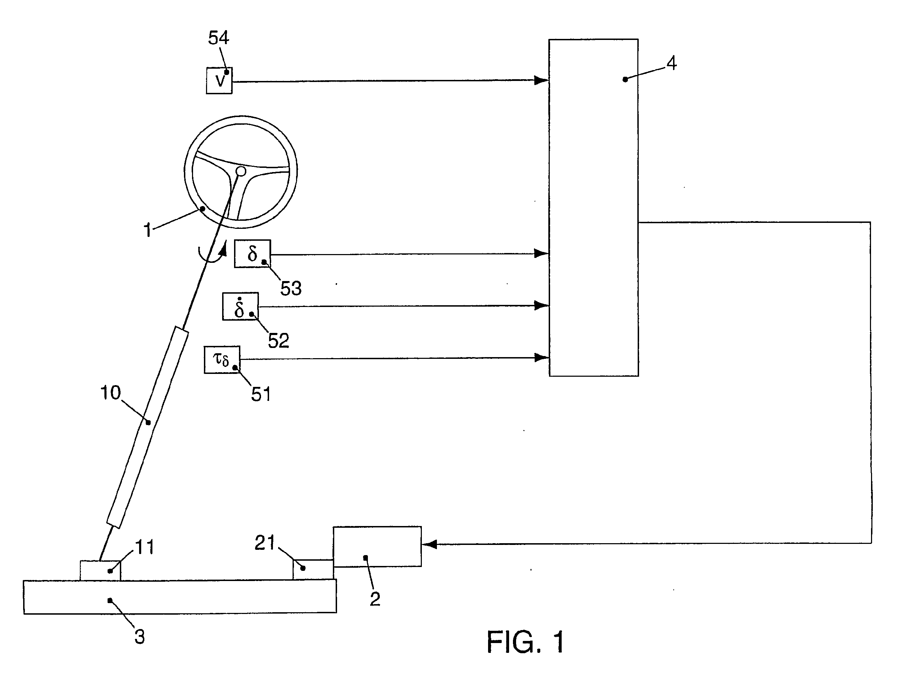

Fig. 1 zeigt eine Prinzipdarstellung einer elektromechanischen Lenkung mit Lenkunterstützung, umfassend ein als Lenkrad ausgebildetes Lenkmittel 1 und einen Servomotor 2, die über Getriebe 11, 21 mit einer Zahnstange 3 verbunden sind. Die Zahnstange 3 ist über eine nicht dargestellte bekannte Lenkverbindung steuerbar mit ebenfalls nicht dargestellten lenkbaren Rädern eines Fahrzeugs verbunden. Das Lenkmittel 1 ist über einen Drehstab 10, und das Getriebe 11 mit der Zahnstange 3 wirkverbunden. Für eine Lenkunterstützung wird zusätzlich durch den Servomotor 2 ein in einer Recheneinheit 4 ermitteltes Unterstützungsmoment aufgebracht. Das Unterstützungsmoment wird in Abhängigkeit einer Fahrsituation des Fahrzeugs ermittelt. Die Fahrsituation ist durch Fahrgeschwindigkeit v, Lenkwinkel δ, Lenkwinkelgeschwindigkeit δ° und Lenkmoment τ_{δ} beschreibbar. Das Lenkmoment τ_{δ}, die Lenkwinkelgeschwindigkeit δ° und der Lenkwinkel δ werden durch Sensoreinheit 51- 53 erfaßt. Die Fahrgeschwindigkeit v wird durch einen Sensor 54, beispielsweise ein Tachometer, aufgenommen. Es ist auch denkbar, die Lenkwinkelgeschwindigkeit δ° durch eine Ableitung aus dem Lenkwinkel δ zu ermitteln. Alle aufgenommenen Werte der Fahrsituation werden der Recheneinheit 4 zugeführt. In der Recheneinheit 4 wird anhand dieser Daten ein Unterstützungsmoment ermittelt, beispielsweise eine Lenkunterstützung durch eine Geradeauslaufkorrektur.

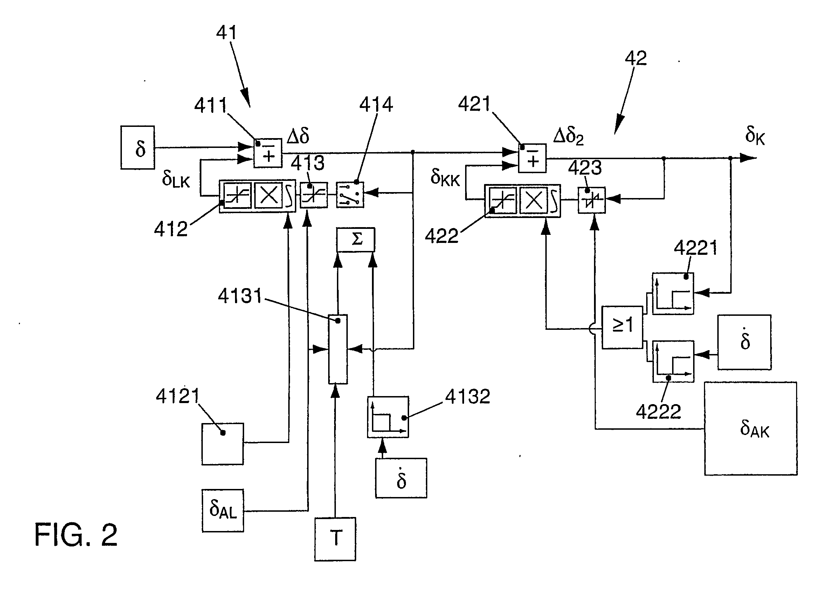

Fig. 2 zeigt schematisch die Ermittlung eines Korrekturwertes δ_{K} in der Recheneinheit 4 für eine Geradeauslaufkorrektur umfassend eine Langzeitkorrektur 41 und eine Kurzzeitkorrektur 42. Die Geradeauslaufkorrektur ist nur aktiviert, wenn die Fahrzeuggeschwindigkeit gering ist, beispielsweise kann vorgegeben werden, daß die Fahrzeuggeschwindigkeit unter 35 km/h liegen muß.

Eingangswert ist der Lenkwinkel δ. In einem Baustein 411 wird die Differenz Δδ zwischen einem ermittelten Langzeitkorrekturwert δ_{LK} und dem anliegenden Lenkwinkel δ gebildet. Der ermittelte Langzeitkorrekturwert δ_{LK} ist auch ein Erwartungswert für einen anliegenden Lenkwinkel bei einer Geradeausfahrt. Der Langzeitkorrekturwert δ_{LK} wird erlernt. Das Lernverfahren umfaßt einen Integrator 412. Startwert des Integrators 442 ist beispielsweise ein Korrekturwert, welcher in einer früheren Korrektur erlernt wurde. Der Startwert ist in einem Speichermedium 4121, beispielsweise einem EEPROM, abgelegt. Die Ermittlung des Langzeitkorrekturwertes δ_{LK} wird deaktiviert, wenn die Lenkwinkelgeschwindigkeit δ° einen vorgegebenen Arbeitsbereich übersteigt und/oder wenn die Differenz Δδ über einen Zeitraum T einen maximalen Arbeitsbereich δ_{AL} für eine Langzeitkorrektur überschreitet. Durch die erste Maßnahme wird eine Berücksichtigung von situationsbedingten schnellen Lenkeingriffen verhindert, durch die zweite Maßnahme wird ausgeschlossen, daß ein zu erlernender Langzeitkorrekturwert δ_{LK} aufgrund langgezogener Kurven verfälscht wird. Durch einen Baustein 413 wird die Langzeitkorrektur auf den Arbeitsbereich δ_{AL} begrenzt. Durch einen konstanten Faktor ist eine Lerngeschwindigkeit zum Erlernen des Langzeitkorrekturwertes δ_{LK} unter Verwendung des Integrators 412 beeinflußbar.

Für die Kurzeitkorrektur wird in einem Baustein 421 die Differenz Δδ₂ zwischen dem Langzeitkorrekturwert δ_{LK} und einem Kurzzeitkorrekturwert δ_{KK} ermittelt. Der Kurzzeitkorrekturwert δ_{KK} wird mittels eines Integrators 422 erhalten, wobei der Startwert für den Kurzzeitkorrekturwert δ_{KK} immer Null beträgt. Der Arbeitsbereich für eine Kurzzeitkorrektur ist durch einen Baustein 423 auf einen Arbeitsbereich δ_{AK} beschränkt, wobei ausschließlich in diesem Bereich eine Korrektur stattfindet. Der Arbeitsbereich δ_{AK} für eine Kurzzeitkorrektur kann dabei mit dem Arbeitsbereich δ_{AL} für eine Langzeitkorrektur zusammenfallen, bevorzugt ist jedoch ein geringerer Arbeitsbereich zu wählen. In einem Baustein 4221 wird ein Einhalten eines maximalen Korrekturwertes überwacht. Wird dieser überschritten, so wird der Integrator 422 zurückgesetzt. Eine Kurzzeitkorrektur ist an veränderte Fahrsituationen sofort anzupassen. Aus diesem Grund wird der Integrator 422 nach einem Lenkeingriff zurückgesetzt. Ein Lenkeingriff ist durch die Lenkwinkelgeschwindigkeit δ° detektierbar. In einem Baustein 4222 wird ein Überschreiten eines maximalen Wertes der Lenkwinkelgeschwindigkeit δ° überwacht. Aus dem ermittelten Korrekturwert δ_{K} ist ein Unterstützungsmoment ableitbar mit welchem der Servomotor angesteuert wird. Der Korrekturwert kann jedoch auch über einen Regelalgorithmus aufgebracht werden.

Es ist denkbar, anstelle eines Korrekturwinkels ein Korrekturmoment zu erlernen. Zudem sind andere Bedingungen für ein Rücksetzen mindestens eines Integrators 412,422 vorstellbar. Beispielsweise ist mittels eines Neigungssensors ein Übergang von einer geneigten Straße auf eine ebene Straße detektierbar. Daneben sind Informationen von Raddrehzahlmessungen oder aus dem Navigationssystem verwendbar. Die Bausteine können getrennt oder gemeinsam realisiert werden und eine Integration ist softwaretechnisch oder hardwaretechnisch möglich.

## Patentansprüche

1. Vorrichtung für eine Lenkunterstützung für Fahrzeuge mit elektromechanischer Lenkung, wobei lenkbare Fahrzeugräder sowohl mit einem durch einen Fahrer beeinflussbaren Lenkmittel (1) als auch mit einem elektrischen Servomotor (2) antreibend verbunden sind, in mindestens einem Rechenmittel (4) ein Unterstützungswinkel und/oder ein Unterstützungsmoment ermittelt wird und der Unterstützungswinkel und/oder das Unterstützungsmoment durch den Servomotor (2) aufgebracht wird, wobei
der Unterstützungswinkel (δ_{K}) und/oder das Unterstützungsmoment mindestens aus einem Langzeitkorrekturwert (δ_{LK}) für eine Langzeitkorrektur (41) und/oder einem Kurzzeitkorrekturwert (δ_{KK}) für eine Kurzzeitkorrektur (42) gebildet wird, wobei ein Differenzwinkel zwischen einem Lenkwinkel (δ) und einer Geradeausfahrt erfasst wird und mindestens ein Korrekturwert (δ_{LK}, δ_{KK}) mindestens in Abhängigkeit des Differenzwinkels erlernt wird, die Langzeitkorrektur (41) und/oder die Kurzzeitkorrektur (42) fahrsituationsabhängig zu- und/oder abschaltbar ist, wobei die Fahrsituation in dem Rechenmittel (4) mindestens aus dem Lenkwinkel (δ), der Lenkwinkelgeschwindigkeit (δ°) und/oder der Fahrzeuggeschwindigkeit (v) ermittelt wird **dadurch gekennzeichnet, dass** der Korrekturwert (δ_{LK}) der Langzeitkorrektur (41) durch einen Integrator (412) ermittelt wird, wobei ein Initialwert des Integrators (412) in einem Speichermedium (4121) abgespeichert ist, beispielsweise in einem EEPROM.

2. Vorrichtung nach Anspruch 1, **dadurch gekennzeichnet, dass** die Geradeausfahrt durch den Langzeitkorrekturwert (δ_{LK}) abgebildet wird.

3. Vorrichtung nach Anspruch 1 oder 2, **dadurch gekennzeichnet, dass** mindestens die Langzeitkorrektur (41) deaktiviert wird, wenn in mindestens einem Baustein (4131, 4132) ein Überschreiten eines Schwellwertes der Lenkwinkelgeschwindigkeit (δ°) und/oder ein Überschreiten eines Schwellwertes des Differenzwinkels über einen festgelegten Zeitraum erkannt wird.

4. Vorrichtung nach einem der vorgenannten Ansprüche, **dadurch gekennzeichnet, dass** der Korrekturwert (δ_{KK}) der Kurzzeitkorrektur (42) durch einen Integrator (422) ermittelt wird, wobei ein Initialwert des Integrators (422) Null ist und der Integrator (422) mindestens in Abhängigkeit des Unterstützungswinkels (δ_{K}) und/oder der Lenkwinkelgeschwindigkeit (δ°) auf den Initialwert zurückgesetzt wird.

5. Verfahren für eine Lenkunterstützung für Fahrzeuge mit elektromechanischer Lenkung, wobei lenkbare Fahrzeugräder sowohl mit einem durch einen Fahrer beeinflussbaren Lenkmittel (1) als auch mit einem elektrischen Servomotor (2) antreibend verbunden sind, in mindestens einem Rechenmittel (4) ein Unterstützungswinkel und/oder ein Unterstützungsmoment ermittelt wird und der Unterstützungswinkel und/oder das Unterstützungsmoment durch den Servomotor (2) aufgebracht wird, wobei
der Unterstützungswinkel (δ_{K}) und/oder das Unterstützungsmoment mindestens aus einem Langzeitkorrekturwert (δ_{LK}) für eine Langzeitkorrektur (41) und/oder einem Kurzzeitkorrekturwert (δ_{KK}) für eine Kurzzeitkorrektur (42) gebildet wird, wobei ein Differenzwinkel zwischen einem Lenkwinkel (δ) und einer Geradeausfahrt erfasst wird und mindestens ein Korrekturwert (δ_{LK}, δ_{KK}) mindestens in Abhängigkeit des Differenzwinkels erlernt wird, die Langzeitkorrektur (41) und/oder die Kurzzeitkorrektur (42) fahrsituationsabhängig zu- und/oder abgeschaltet werden, wobei die Fahrsituation in dem Rechenmittel (4) mindestens aus dem Lenkwinkel (δ), der Lenkwinkelgeschwindigkeit (δ°) und/oder der Fahrzeuggeschwindigkeit (v) ermittelt wird **dadurch gekennzeichnet, dass** der Korrekturwert (δ_{LK}) der Langzeitkorrektur (41) durch einen Integrator (412) ermittelt wird, wobei ein Initialwert des Integrators (412) in einem Speichermedium (4121) abgespeichert ist, beispielsweise in einem EEPROM.

6. Verfahren nach Anspruch 5, **dadurch gekennzeichnet, dass** die Geradeausfahrt durch den Langzeitkorrekturwert (δ_{LK}) abgebildet wird.

7. Verfahren nach Anspruch 5 oder 6, **dadurch gekennzeichnet, dass** mindestens die Langzeitkorrektur (41) deaktiviert wird, wenn in mindestens einem Baustein (4131, 4132) ein Überschreiten eines Schwellwertes der Lenkwinkelgeschwindigkeit (δ°) und/oder ein Überschreiten eines Schwellwertes des Differenzwinkels über einen festgelegten Zeitraum erkannt wird.

8. Verfahren nach einem der Ansprüche 5 bis 7, **dadurch gekennzeichnet, dass** der Korrekturwert (δ_{KK}) der Kurzzeitkorrektur (42) durch einen Integrator (422) ermittelt wird, wobei ein Initialwert des Integrators (422) Null ist und der Integrator (422) mindestens in Abhängigkeit des Unterstützungswinkels (δ_{K}) und/oder der Lenkwinkelgeschwindigkeit (δ°) auf den Initialwert zurückgesetzt wird.

## Claims

1. Device for providing steering assistance for vehicles having electromechanical steering, wherein steerable vehicle wheels have a drive connection both to a steering means (1) which can be influenced by a driver and to an electric servo motor (2), an assistance angle and/or an assistance torque are determined in at least one computing means (4), and the assistance angle and/or the assistance torque are applied by the servo motor (2), wherein the assistance angle (δ_{K}) and/or the assistance torque are formed at least from a long-term correction value (δ_{LK}) for a long-term correction (41) and/or a short-term correction value (δ_{KK}) for a short-term correction (42), wherein a difference angle is sensed between a steering angle (δ) and a straight-ahead travel, and at least one correction value (δ_{LK}, δ_{KK}) is learnt at least as a function of the difference angle, the long-term correction (41) and/or the short-term correction (42) can be activated and/or deactivated as a function of the travel situation, wherein the travel situation is determined in the computing means (4) at least from the steering angle (δ), the steering angle speed (δ°) and/or the velocity (v) of the vehicle, **characterized in that** the correction value (δ_{LK}) of the long-term correction (41) is determined by means of an integrator (412), wherein an initial value of the integrator (412) is stored in a memory medium (4121), for example in an EEPROM.

2. Device according to Claim 1, **characterized in that** straight-ahead travel is mapped by means of the long-term correction value (δ_{LK}).

3. Device according to Claim 1 or 2, **characterized in that** at least the long-term correction (41) is deactivated if it is detected in at least one module (4131, 4132) that a threshold value of the steering angle speed (δ°) is exceeded and/or that a threshold value of the difference angle is exceeded over a defined time period.

4. Device according to one of the preceding claims, **characterized in that** the correction value (δ_{KK}) of the short-term correction (42) is determined by means of an integrator (422), wherein an initial value of the integrator (422) is zero, and the integrator (422) is reset to the initial value at least as a function of the assistance angle (δ_{K}) and/or the steering angle speed (δ°).

5. Method of providing steering assistance for vehicles having electromechanical steering, wherein steerable vehicle wheels have a drive connection both to a steering means (1) which can be influenced by a driver and to an electric servo motor (2), an assistance angle and/or an assistance torque are determined in at least one computing means (4), and the assistance angle and/or the assistance torque are applied by the servo motor (2), wherein the assistance angle (δ_{K}) and/or the assistance torque are formed at least from a long-term correction value (δ_{LK}) for a long-term correction (41) and/or a short-term correction value (δ_{KK}) for a short-term correction (42), wherein a difference angle is sensed between a steering angle (δ) and a straight-ahead travel, and at least one correction value (δ_{LK}, δ_{KK}) is learnt at least as a function of the difference angle, the long-term correction (41) and/or the short-term correction (42) can be activated and/or deactivated as a function of the travel situation, wherein the travel situation is determined in the computing means (4) at least from the steering angle (δ), the steering angle speed (δ°) and/or the velocity (v) of the vehicle, **characterized in that** the correction value (δ_{LK}) of the long-term correction (41) is determined by means of an integrator (412), wherein an initial value of the integrator (412) is stored in a memory medium (4121), for example in an EEPROM.

6. Method according to Claim 5, **characterized in that** the straight-ahead travel is mapped by the long-term correction value (δ_{LK}).

7. Method according to Claim 5 or 6, **characterized in that** at least the long-term correction (41) is deactivated if it is detected in at least one module (4131, 4132) that a threshold value of the steering angle speed (δ°) is exceeded and/or that a threshold value of the difference angle is exceeded over a defined time period.

8. Method according to one of Claims 5 to 7, **characterized in that** the correction value (δ_{KK}) of the short-term correction (42) is determined by means of an integrator (422), wherein an initial value of the integrator (422) is zero, and the integrator (422) is reset to the initial value at least as a function of the assistance angle (δ_{K}) and/or the steering angle speed (δ°).

## Revendications

1. Dispositif pour une assistance à la direction pour véhicules automobiles équipés d'une direction électromécanique, les roues orientables du véhicule étant en liaison motrice à la fois avec un moyen de direction (1) pouvant être influencé par un conducteur et avec un servomoteur (2) électrique, un angle d'assistance et/ou un moment d'assistance étant déterminé dans au moins un moyen de calcul (4) et l'angle d'assistance et/ou le moment d'assistance étant appliqué par le servomoteur (2), l'angle d'assistance (δ_{K}) et/ou le moment d'assistance étant calculé au moins à partir d'une valeur de correction à long terme (δ_{LK}) pour une correction à long terme (41) et/ou une valeur de correction à court terme (δ_{KK}) pour une correction à court terme (42), un angle différentiel entre un angle de direction (δ) et un déplacement en ligne droite étant acquis et au moins une valeur de correction (δ_{LK,} δ_{KK}) étant apprise au moins en fonction de l'angle différentiel, la correction à long terme (41) et/ou la correction à court terme (42) pouvant être activées et/ou désactivées en fonction de la situation de conduite, la situation de conduite étant déterminée dans le moyen de calcul (4) au moins à partir de l'angle de direction (δ), de la vitesse angulaire de direction (δ°) et/ou de la vitesse du véhicule (v), **caractérisé en ce que** la valeur de correction (δ_{LK}) de la correction à long terme (41) est déterminée par un intégrateur (412), une valeur initiale de l'intégrateur (412) étant enregistrée dans un support d'enregistrement (4121), par exemple dans une EEPROM.

2. Dispositif selon la revendication 1, **caractérisé en ce que** le déplacement en ligne droite est formé par la valeur de correction à long terme (δ_{LK}).

3. Dispositif selon la revendication 1 ou 2, **caractérisé en ce qu'**au moins la correction à long terme (41) est désactivée lorsqu'un dépassement d'une valeur de seuil de la vitesse angulaire de direction (δ°) et/ou un dépassement d'une valeur de seuil de l'angle différentiel est détecté pendant une période donnée dans au moins un composant (4131, 4132).

4. Dispositif selon l'une des revendications précédentes, **caractérisé en ce que** la valeur de correction (δₖₖ) de la correction à court terme (42) est déterminée par un intégrateur (422), une valeur initiale de l'intégrateur (422) étant nulle et l'intégrateur (422) étant ramené à la valeur initiale au moins en fonction de l'angle d'assistance (δ_{K}) et/ou de la vitesse angulaire de direction (δ°).

5. Procédé pour une assistance à la direction pour véhicules automobiles équipés d'une direction électromécanique, les roues orientables du véhicule étant en liaison motrice à la fois avec un moyen de direction (1) pouvant être influencé par un conducteur et avec un servomoteur (2) électrique, un angle d'assistance et/ou un moment d'assistance étant déterminé dans au moins un moyen de calcul (4) et l'angle d'assistance et/ou le moment d'assistance étant appliqué par le servomoteur (2), l'angle d'assistance (δ_{K}) et/ou le moment d'assistance étant calculé au moins à partir d'une valeur de correction à long terme (δ_{Lk}) pour une correction à long terme (41) et/ou une valeur de correction à court terme (δ_{KK}) pour une correction à court terme (42), un angle différentiel entre un angle de direction (δ) et un déplacement en ligne droite étant acquis et au moins une valeur de correction (δ_{LK,} δ_{KK}) étant apprise au moins en fonction de l'angle différentiel, la correction à long terme (41) et/ou la correction à court terme (42) pouvant être activées et/ou désactivées en fonction de la situation de conduite, la situation de conduite étant déterminée dans le moyen de calcul (4) au moins à partir de l'angle de direction (δ), de la vitesse angulaire de direction (δ°) et/ou de la vitesse du véhicule (v), **caractérisé en ce que** la valeur de correction (δ_{LK}) de la correction à long terme (41) est déterminée par un intégrateur (412), une valeur initiale de l'intégrateur 412) étant enregistrée dans un support d'enregistrement (4121), par exemple dans une EEPROM.

6. Procédé selon la revendication 5, **caractérisé en ce que** le déplacement en ligne droite est formé par la valeur de correction à long terme (δ_{LK}).

7. Procédé selon la revendication 5 ou 6, **caractérisé en ce qu'**au moins la correction à long terme (41) est désactivée lorsqu'un dépassement d'une valeur de seuil de la vitesse angulaire de direction (δ°) et/ou un dépassement d'une valeur de seuil de l'angle différentiel est détecté pendant une période donnée dans au moins un composant (4131, 4132).

8. Procédé selon l'une des revendications 5 à 7, **caractérisé en ce que** la valeur de correction (δ_{KK}) de la correction à court terme (42) est déterminée par un intégrateur (422), une valeur initiale de l'intégrateur (422) étant nulle et l'intégrateur (422) étant ramené à la valeur initiale au moins en fonction de l'angle d'assistance (δ_{K}) et/ou de la vitesse angulaire de direction (δ°).
